# FASCICULE DE BREVET EUROPEEN

(11) **EP 1 957 787 B1**
(45) Date de publication et mention de la délivrance du brevet: **17.11.2010**
(21) Numéro de dépôt: 06842026.4
(22) Date de dépôt: 23.11.2006
(51) Int. Cl.: F02M 35/112

(54) **REPARTITEUR D AIR D ALIMENTATION POUR MOTEUR A COMBUSTION INTERNE**
LUFTZUFUHRVERTEILER FÜR EINEN VERBRENNUNGSMOTOR
AIR SUPPLY DISTRIBUTOR FOR AN INTERNAL COMBUSTION ENGINE

(30) Priorité: 01.12.2005 FR 0512206
(43) Date de publication de la demande: 20.08.2008
(73) Titulaire: Renault SAS, 92100 Boulogne Billancourt (FR)
(72) Inventeur: ALIZON, Franck, F-78480 Verneuil-sur-Seine (FR); ANTHOINE, Pierre, F-92500 Rueil-Malmaison (FR)
(74) Mandataire: Religieux, Vincent
(86) Numéro de dépôt international: PCT/FR2006/051215
(87) Numéro de publication internationale: WO 2007/063238

(56) Documents cités:
- FR-A- 2 868 132
- JP-A- 9 317 578
- JP-A- 62 162 766
- JP-A- 2003 074 357

## Description

La présente invention concerne un répartiteur de l'air admis dans les cylindres d'un moteur à combustion interne, notamment pour véhicules automobiles, étant entendu que le terme « air » doit être pris dans son sens large et notamment pour couvrir tout mélange d'admission gazeux, notamment des mélanges air/carburant.

D'une façon générale, la répartition de l'air admis dans les cylindres d'un moteur à combustion interne est réalisée en cherchant à éliminer ou réduire sensiblement tout déséquilibre dans l'alimentation de chacun des cylindres, tant au niveau d'un même cylindre en cas de pluralité de conduits d'alimentation qu'au niveau de la répartition entre les cylindres. En particulier dans les moteurs à deux conduits d'admission par cylindre de type diesel pour lesquels l'aérodynamique des gaz d'admission est critique, il a été remarqué des baisses du 'swirl' dans certains cylindres, en particulier dans le second cylindre distribué, qui auraient pour origine la géométrie du répartiteur (le 'swirl' pouvant être défini comme un tourbillon axial dans le cylindre). Il en est ainsi, en particulier pour des répartiteurs d'air coudés à 180°, notamment lorsque, pour des raisons d'encombrement et de compacité des moteurs destinés à être montés dans le compartiment moteur d'un véhicule automobile, le coude est incliné par rapport à un plan de référence diamétral au corps tubulaire et passant par la droite d'alignement des embranchements des canaux de jonctions des conduits d'alimentation des cylindres.

L'invention a pour but un répartiteur à alimentation améliorée au niveau du second cylindre distribué eu égard à la géométrie du répartiteur et notamment de remédier aux inconvénients décrits ci-avant.

On connaît, notamment de la publication JP2003074357 et de la publication JP 09317 578, un répartiteur d'air pour moteur à combustion interne du type à deux soupapes d'admission par cylindres à entrée d'air axiale en extrémité et dans lequel les courbures des canaux de jonction sont adaptées pour uniformiser le 'swirl' entre les cylindres. On connaît également de la publication JP63208616, un répartiteur d'air pour moteur à combustion interne à quatre cylindres en ligne, à une soupape d'admission par cylindre, à entrée centrale latérale entre le second et le troisième cylindre et dans lequel l'entrée du canal de jonction du troisième cylindre comporte un guide d'air pour donner aux lignes de courant, en amont de la culasse, le même rayon de courbure, et dans le même sens, qu'au second cylindre. On connaît également de la publication JP113509963, un répartiteur d'air sans canaux de jonction pour moteur à combustion interne à trois cylindres en ligne du type à une soupape d'admission et dans lequel sont disposées des projections d'adaptation à profil constant entre les premier et second cylindres distribués et entre le second et le troisième cylindre distribués. On notera que les solutions proposées dans ces trois publications japonaises pour équilibrer le 'swirl' entre les cylindres ne concernent que des répartiteurs d'air de structures particulières tout à fait distinctes des répartiteurs d'air coudés et pour lesquelles les perturbations aérodynamiques internes liées à ou induites par ces répartiteurs n'existent pas.

L'invention propose un répartiteur d'air pour moteur à combustion interne comportant au moins une pluralité de cylindres en ligne à deux conduits d'admission par cylindre, ledit répartiteur comportant un corps principal tubulaire sensiblement cylindrique pourvu de canaux de jonction latéraux pour l'alimentation des cylindres et dont les embranchements avec le corps principal tubulaire débouchent sensiblement de façon alignée sur une génératrice dudit corps principal tubulaire, le corps principal tubulaire étant prolongé en amont desdits embranchements d'un coude sensiblement à 180° ouvrant sur un orifice d'entrée d'air, ledit coude étant incliné par rapport au plan diamétral dudit corps principal incorporant la génératrice d'alignement des embranchements, **caractérisé en ce qu**'il comporte un bossage rentrant disposé dans le corps tubulaire à l'opposé des embranchements des canaux de jonction du premier et du second cylindre distribué et présentant une zone sommitale entre les embranchements du premier et du second cylindre distribués.

Ainsi qu'il apparaîtra dans la description, un tel agencement permet de rééquilibrer les débits entre les deux canaux de jonction du second cylindre distribué.

Selon un mode réalisation préférentiel, le répartiteur est adapté pour être monté parallèlement à la face d'admission correspondante de la culasse dudit moteur avec les canaux de jonction disposés en regard des conduits d'admission de la culasse, et correspondant aux cylindres respectifs, et parallèlement à l'alignement des cylindres de façon à ce que ledit plan diamétral soit normal à ladite face d'admission culasse. Un tel agencement permet d'améliorer la compacité du moteur équipé du répartiteur.

Selon une première variante du répartiteur selon de l'invention, la zone sommitale est disposée juste en aval de l'embranchement aval du premier cylindre distribué. Avantageusement le bossage présente un profil convergent/divergent dans le sens de l'écoulement d'air dans le corps tubulaire de part et d'autre de la zone sommitale, notamment un profil convergent/divergent s'étendant sensiblement de l'aval de l'embranchement amont du premier cylindre distribué à l'amont de l'embranchement aval du second cylindre distribué.

Selon une autre variante de l'invention le bossage présente une extension sensiblement perpendiculaire à la direction de l'écoulement d'air dans le corps tubulaire.

Selon encore une autre variante de l'invention le répartiteur comporte en amont et au voisinage des embranchements des conduits du premier cylindre distribué et du côté de l'inclinaison du coude une rampe d'étranglement partiel de la section d'écoulement d'air du corps principal. Avantageusement la rampe se présente sous la forme d'un tremplin asymétrique dont les faces amont et aval sont respectivement à faible et à forte pente, ladite rampe étant inclinée latéralement par rapport audit pian diamétral.

Un tel agencement au niveau du premier cylindre distribué d'une part intervient sur l'aérodynamique interne du répartiteur et permet de retrouver des niveaux de 'swirl' sensiblement égaux dans les différents cylindres du moteur avec une remontée du 'swirl' dans le premier cylindre distribué et de rééquilibrer les débits entre les deux canaux de jonction du même premier cylindre distribué. On notera avec intérêt qu'il n'y a pas d'interaction négative entre les agencements aérodynamiques du second et du premier cylindre distribué susceptible de nuire à l'efficacité de l'un ou l'autre des agencements. En particulier l'efficacité obtenue pour le répartiteur d'air par la seule présence de l'agencement aérodynamique au niveau du second cylindre distribué n'est quasiment pas altérée par l'introduction en amont de l'agencement aérodynamique au niveau du premier cylindre distribué. Ainsi il a été possible de vérifier qu'un répartiteur à coude incliné selon l'invention combinant les deux agencements aérodynamiques au niveau des premier et second cylindre distribués n'induit qu'une très faible dispersion du 'swirl' d'un cylindre à un autre.

Selon encore une autre variante de l'invention, le répartiteur comporte sensiblement en sortie de coude en face et en amont par rapport à ladite rampe un second bossage rentrant à extension sensiblement perpendiculaire à la direction de l'écoulement d'air dans le corps tubulaire. Avantageusement le second bossage présente un profil convergent/divergent dans le sens de l'écoulement d'air dans le corps tubulaire. Un tel second bossage ou bosse permet d'améliorer la perméabilité globale du répartiteur et en particulier pour le premier poste distribué, étant noté que la perméabilité d'une tubulure correspond à sa capacité à laisser passer un débit d'air pour une perte d'énergie donnée. Ici encore l'introduction du second bossage en combinaison avec les deux agencements aérodynamiques améliore encore les performances notamment en débit du répartiteur d'air selon l'invention.

Selon encore une autre variante selon l'invention le corps principal tubulaire cylindrique présente une section droite sensiblement rectangulaire à angles arrondis dont un petit côté correspond au flanc du corps tubulaire opposé au coude et porte lesdits embranchements alignés des canaux de jonction.

L'invention concerne également des moteurs à combustion interne, notamment pour véhicules automobiles, comportant au moins un répartiteur d'air à deux canaux de jonction d'admission par cylindre distribué selon l'invention dans toutes les variantes présentées ci-avant et monté sur une face d'admission de la culasse dudit moteur. En particulier des moteurs à combustion interne de type diesel, notamment pour véhicule automobile, comportant au moins un répartiteur d'air à deux canaux de jonction par cylindre distribué selon l'invention dans toutes les variantes présentées ci-avant et monté sur une face d'admission de la culasse dudit moteur.

D'autres caractéristiques et avantages de la présente invention apparaîtront à la lecture de la description qui va suivre présentée uniquement à titre d'exemple non limitatif en référence aux dessins ci-joints dans lesquels:
- la figure 1 montre une vue schématique de dessus d'un premier mode de réalisation d'un répartiteur d'air selon l'invention en place le long de la face d'admission d'une culasse de moteur à combustion interne ;
- la figure 2 montre une vue schématique selon la coupe AA agrandie du répartiteur d'air de la figure 1 ;
- la figure 3 montre une vue schématique de dessous d'un second mode de réalisation d'un répartiteur d'air selon l'invention en place le long de la face d'admission d'une culasse de moteur à combustion interne ; et
- la figure 4 montre une vue schématique selon la coupe BB agrandie du répartiteur d'air de la figure 3 .

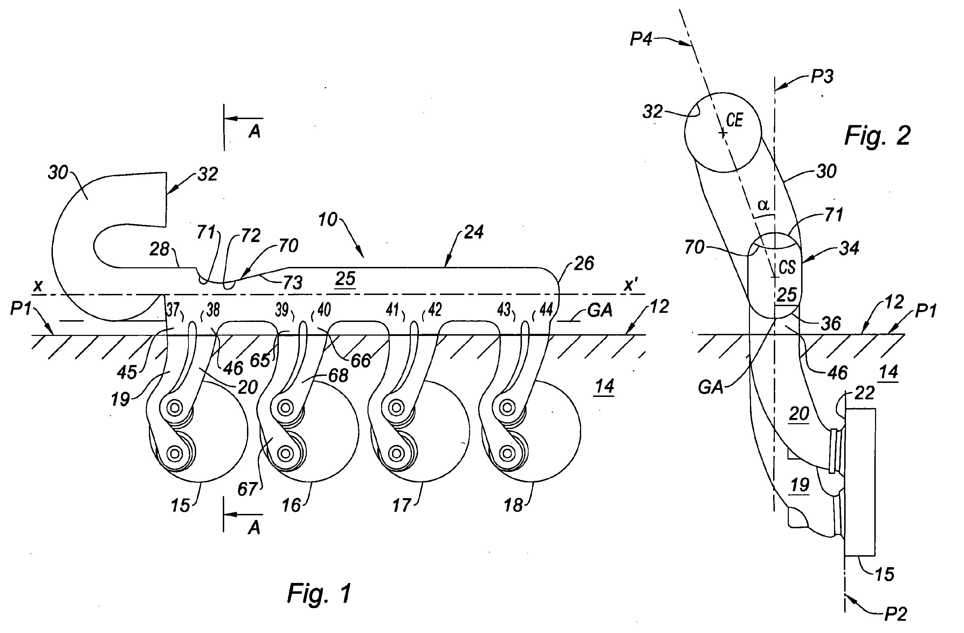

Le répartiteur d'air d'admission 10 représenté sur les figures 1 et 2 est montré en position opérationnelle fixé à la face d'admission 12 de la culasse 14 d'un moteur à combustion interne à quatre cylindres en ligne 15, 16, 17 et 18. A titre d'exemple non limitatif le moteur à combustion interne intégrant la culasse 14 est de type diesel, notamment pour véhicule automobile, mais sans sortir du cadre de l'invention le moteur à combustion interne peut être d'un type différent, par exemple un moteur 4 temps à essence, notamment pour véhicule automobile.

Si l'on considère les figures 1 et 2, on peut remarquer que la face admission culasse 12 s'étend dans le plan P1 normal au plan des figures 1 et 2 de telle sorte que sur la figure 1, les cylindres 15 à 18 sont représentés vus de dessus avec chacun des conduits d'alimentation distincts, par exemple pour le cylindre 15, premier cylindre distribué, les conduits 19 et 20 dont les extrémités, débouchant sur la tête du cylindre 15 au niveau de la face feu 22, portent chacune le siège d'une des deux soupapes d'alimentation (non représentées). Pour la clarté du dessin, les soupapes d'échappement n'ont pas non plus été représentées. Comme illustré sur la figure 2, la face feu 22 s'étend dans un plan P2 normal au plan des figures 1 et 2 et au plan P1.

Le répartiteur d'air 10 se présente sous la forme d'une tubulure coudée en alliage léger obtenue par moulage soit de façon monobloc soit par éléments séparés convenablement assemblés. Le répartiteur 10 est principalement constitué d'un corps principal tubulaire cylindrique 24 d'axe XX' et, lorsque le répartiteur est monté de façon opérationnelle sur la culasse 14, parallèle à la face d'admission 12 et à la face feu 16. Le corps 24 qui présente une première extrémité 26 fermée au niveau du dernier cylindre distribué, le cylindre 18, est prolongé à son autre extrémité 28 par un coude 30 à 180° ouvrant sur un orifice d'entrée ou d'admission d'air 32 convenablement reliée aux conduites et dispositifs d'alimentation du moteur (non représentés). Comme on peut le voir sur la figure 2 le corps tubulaire cylindrique 24 présente, à titre d'exemple non limitatif, une section droite 34 de forme sensiblement rectangulaire à angles arrondis dont un petit côté 36 correspondant au flanc du corps 24 opposé au coude 32 porte les embranchements 37, 38, 39, 40, 41, 42, 43, 44 des canaux de jonction du répartiteur 10 et destinés à être raccordés aux conduits d'alimentions des quatre cylindres, par exemple pour le premier cylindre distribué 15 les embranchements 37 et 38 sont respectivement appariés aux canaux de jonction 45 et 46 convenablement connectés aux conduits d'alimentation 19 et 20 réalisés dans la culasse. Il en est de même pour les embranchements 39 et 40 respectivement appariés aux canaux de jonction 65 et 66 connectés aux conduits d'alimentation 67 et 68 du second cylindre distribué 16. Comme on peut le voir sur les figures 1 et 2 les embranchements 37 à 44, appariés en tandem, sont sensiblement alignés sur la génératrice GA du corps tubulaire cylindrique 24 parallèle à l'axe XX' et comprise comme ce dernier axe dans le plan diamétral P3 du corps principal 24, lequel plan diamétral P3 est parallèle au plan P2 de la face feu 22 une fois le répartiteur 10 monté sur la culasse.

Si l'on considère la figure 2, on peut remarquer que le coude 30 est incliné par rapport au plan diamétral P3 d'un angle d'inclinaison α défini entre le plan P3 et le plan médian P4 du coude 30 défini à titre d'exemple non limitatif comme un plan normal au plan de la figure 2 et passant par les centres CE et CS des sections d'entrée et de sortie du coude 30 dans le sens de l'écoulement. L'angle α est choisi en général assez faible, préférence entre 10 et 25°, dans le cas présent de l'ordre 20° vers la gauche de la figure 2 à partir de P3. Bien entendu sans sortir du cadre de l'invention le coude du répartiteur d'air peut être incliné sans l'autre sens vers la droite de la figure 2, par exemple de façon symétrique par rapport à P3.

Selon l'invention il est prévu un bossage rentrant 70 disposé dans le corps tubulaire 24 à l'opposé des embranchements 37 à 40 et des canaux de jonction 19, 20, 65 et 66 du premier cylindre distribué 15 et du second cylindre distribué 16 et présentant une zone sommitale 72 entre les embranchements du premier et du second cylindre distribués. D'une façon générale la position et la forme du bossage 70 sont choisies pour donner au bossage un effet venturi d'accélération et d'uniformisation de l'écoulement dans le conduit interne 25 du corps tubulaire 24 en amont des embranchements 39 et 40 du second cylindre distribué 16. Comme on peut le voir sur la figure 1, et de façon avantageuse et non limitative, la zone sommitale 72 est disposée juste en aval de l'embranchement aval 38 du premier cylindre distribué 15. Toujours de façon avantageuse et non limitative le bossage présente un profil convergent/divergent (zone amont 71/ zone aval 73) dans le sens de l'écoulement d'air dans le corps tubulaire 24 de part et d'autre de la zone sommitale 72. En l'espèce le profil convergent/divergent s'étend sensiblement de l'aval de l'embranchement amont 37 du premier cylindre distribué 15 à l'amont de l'embranchement aval 40 du second cylindre distribué 16.

Par ailleurs comme on peut le voir sur la figure 2 le bossage 70 en forme de nappe ou vague présente une extension sensiblement perpendiculaire à la direction de l'écoulement d'air dans le corps tubulaire 24 (selon l'axe XX') et de façon symétrique par rapport au plan P3. d'une façon générale le bossage rentrant 70 dans le conduit interne 25 du corps tubulaire est réalisé directement à la coulée de celui-ci ou au travers d'une pièce rapportée en interne (ou en cas de répartiteur mécano-soudé par un enfoncement approprié de la paroi répartiteur au niveau de la zone frontière coude/corps tubulaire).

Ainsi l'effet venturi sur l'écoulement dans le corps tubulaire 24 obtenu par le bossage 70 permet d'uniformiser l'écoulement juste en amont des canaux de jonction 65 et 66 du second cylindre distribué, de rééquilibrer les débits entre les deux canaux de jonction du second cylindre distribué 16 et à l'agencement aérodynamique correspondant de fonctionner dans des conditions optimales, la baisse du 'swirl' dans le second cylindre distribué 16 engendrée par présence sur le répartiteur d'air d'un coude à 180° incliné étant alors corrigée. Bien entendu le bossage 70 étant symétrique par rapport au plan P3, la correction est obtenue quelque soit le sens d'orientation de l'angle d'inclinaison α vers la gauche ou vers la droite de ce plan P3.

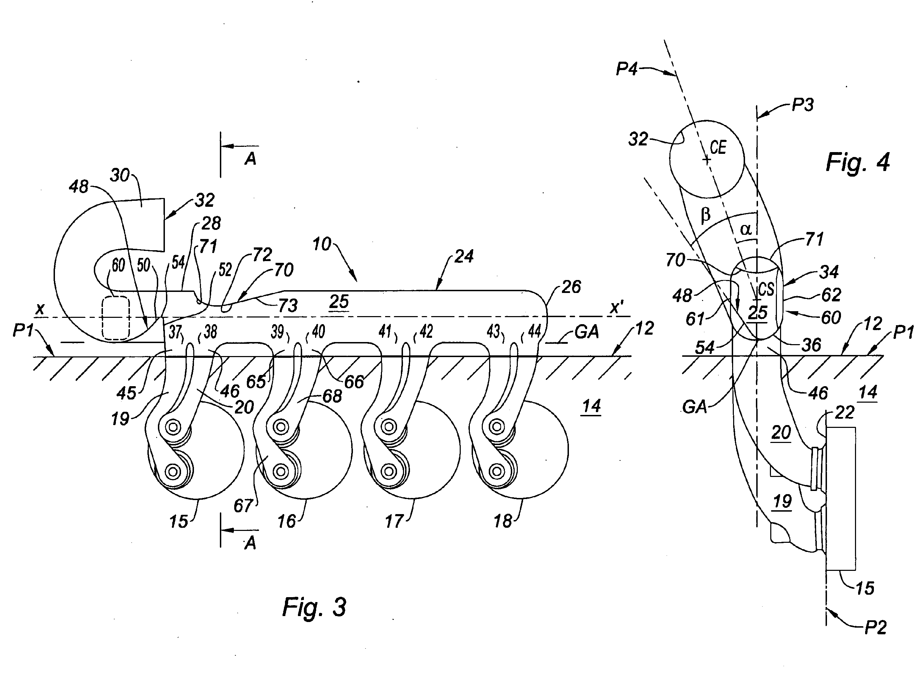

Le répartiteur d'air 10' selon l'invention est très proche du répartiteur 10. Ainsi les éléments identiques entre les deux répartiteurs ne seront pas décrits à nouveau et portent les même références numériques. Les deux répartiteurs se distinguent par la présence sur le répartiteur 10' d'une rampe d'étranglement partiel 48 disposée en sortie du coude 30 au voisinage de l'embranchement 37 du canal de jonction 45 du premier cylindre distribué 15 du côté de l'inclinaison du coude par rapport au plan diamétral P3 et sensiblement à l'opposé du coude (c.à.d. sur le côté correspondant à l'extérieur du coude et sur lequel son placés les embranchements de jonction). La rampe 48 se présente sous la forme d'un tremplin asymétrique dont les faces amont 50 et aval 52 sont respectivement à faible et à forte pente, en l'espèce telle que représentée sur la figure 3 la face 52 est abrupte et à la limite de l'embranchement 37. De plus la rampe 48 est inclinée latéralement par rapport au plan diamétral P3 comme illustrée sur la figure 4. De façon préférentielle non limitative, la projection de la crête 54 de la rampe 48 dans un plan normal audit corps tubulaire 28 (le plan de coupe AA ou plan de la figure 2) et présente un angle d'inclinaison β par rapport au plan diamétral P3 compris entre 1 à 5 fois l'angle d'inclinaison α, en l'espèce de l'ordre de 40°. D'une façon générale la rampe d'étranglement 48 rentrante dans le conduit interne 25 du corps tubulaire est réalisée directement à la coulée de celui-ci ou au travers d'une pièce rapportée en interne (ou en cas de répartiteur mécano-soudé par un enfoncement approprié de la paroi répartiteur au niveau de la zone frontière coude/corps tubulaire). Le taux d'étranglement partiel est de préférence compris entre 5 et 10 % de la section d'écoulement (en l'espèce autour de 10% comme illustré à la figure 2).

La présence de la rampe 48 à une double fonction par rapport à l'aérodynamique de l'alimentation en air du premier cylindre distribué 15, d'une part de rétablir un niveau de 'swirl' sensiblement égal au 'swirl' généré par la culasse sans répartiteur dans le cylindre 15 (compensant ainsi la baisse du 'swirl' dans ce cylindre 15 ayant son origine dans l'inclinaison du coude 30), d'autre part de rééquilibrer les débits entre les deux conduits d'alimentation 19 et 20 d'alimentation de même cylindre 15. Il en résulte que le répartiteur d'air 10' permet de corriger les effets de baisse de 'swirl' sur les premier et second cylindres distribués 15 et 16 dus à la présence du coude incliné (cet effet étant négligeable voire inexistant sur les cylindres suivants 17 et 18).

De façon optionnelle il est également possible de disposer, en sortie de coude 30 et en amont par rapport à la rampe 48 et sur côté opposé de celle-ci, un second bossage rentrant 60 s'étendant sensiblement perpendiculairement par rapport à l'axe XX', soit par rapport à l'écoulement dans le conduit interne 25 du corps tubulaire 24, mais également perpendiculairement au premier bossage 70 comme illustré sur les figures 3 et 4. Le second bossage 60 s'étend transversalement parallèlement au plan P3 sur le flanc 62 du corps tubulaire 24 (opposé au flanc 61 associé à la rampe 48) sur toute la largeur de celui-ci (grand côté de la section droite 34) et présente un profil de type convergent/ divergent (zone amont 61/zone aval 63). Le bossage 60 est en général venu de matière à la coulée du répartiteur d'air (il peut être également réalisé sous la forme d'une pièce rapportée ou, pour des répartiteur mécano-soudés, obtenu déformation de la paroi en sortie de coude). Le second bossage 60 a principalement pour effet de d'améliorer la perméabilité du répartiteur 10' (augmentation du débit d'air pour une perte d'énergie donnée) pour le premier poste distribué, le cylindre 15, sans nuire au gain aérodynamique du répartiteur d'air obtenu par la rampe ou tremplin 48. Il est ainsi possible d'au moins compenser la légère baisse de débit éventuellement provoquée par la présence de la rampe d'étranglement partiel 48.

Bien entendu sans sortir du cadre de l'invention le coude du répartiteur d'air 10' peut être incliné dans l'autre sens vers la droite de la figure 2, par exemple de façon symétrique par rapport à P3, étant entendu que la rampe d'étranglement partiel correspondante sera également disposée symétriquement par rapport à ce plan à la rampe 28.

## Revendications

1. Répartiteur d'air (10,10') pour moteur à combustion interne comportant au moins une pluralité de cylindres en ligne (15,16,17,18) à deux conduits d'admission par cylindre, ledit répartiteur comportant un corps principal tubulaire (24) sensiblement cylindrique pourvu de canaux de jonction latéraux (45,46,65,66) pour l'alimentation des cylindres et dont les embranchements (37,38,39,40,41,42,43,44) avec le corps principal tubulaire débouchent sensiblement de façon alignée sur une génératrice GA dudit corps principal tubulaire, le corps principal tubulaire (24) étant prolongé en amont desdits embranchements d'un coude (30) sensiblement à 180° ouvrant sur un orifice d'entrée d'air (32), ledit coude étant incliné par rapport au plan diamétral P3 dudit corps principal incorporant la génératrice GA d'alignement des embranchements, **caractérisé en ce qu'**il comporte un bossage rentrant (70) disposé dans le corps tubulaire (24) à l'opposé des embranchements (37,38,40,41) des canaux de jonction (45,46,65,66) du premier (15) et du second cylindre distribué (16) et présentant une zone sommitale (72) entre les embranchements du premier et du second cylindre distribués.

2. Répartiteur d'air (10,10') selon la revendication 1, **caractérisé en ce que** la zone sommitale (72) est disposée juste en aval de l'embranchement aval (38) du premier cylindre distribué (15).

3. Répartiteur d'air (10,10') selon l'une des revendications 1 et 2, **caractérisé en ce que** ledit bossage (70) présente un profil convergent/divergent (71,73) dans le sens de l'écoulement d'air dans le corps tubulaire (24) de part et d'autre de la zone sommitale (72).

4. Répartiteur d'air (10,10') selon les revendications 2 et 3 prises en combinaison, **caractérisé en ce que** le profil convergent/divergent (71,73) s'étend sensiblement de l'aval de l'embranchement amont (37) du premier cylindre distribué (15) à l'amont de l'embranchement aval (40) du second cylindre distribué (16).

5. Répartiteur d'air (10,10') selon l'une des revendications 1 à 4, **caractérisé en ce que** ledit bossage (70) présente une extension sensiblement perpendiculaire à la direction de l'écoulement d'air dans le corps tubulaire (24).

6. Répartiteur d'air (10') selon l'une des revendications 1 à 5, **caractérisé en ce qu'**il comporte en amont et au voisinage des embranchements (37,38) des canaux de jonction (45,46) du premier cylindre distribué (15) et du côté de l'inclinaison du coude une rampe d'étranglement partiel (48) de la section d'écoulement d'air du corps principal tubulaire (24).

7. Répartiteur d'air (10') selon la revendication 5, **caractérisé en ce que** ladite rampe (48) se présente sous la forme d'un tremplin asymétrique dont les faces amont (50) et aval (52) sont respectivement à faible et à forte pente, ladite rampe étant inclinée latéralement par rapport audit plan diamétral P3.

8. Répartiteur d'air (10') selon l'une des revendications 6 et 7, **caractérisé en ce qu'**il comporte sensiblement en sortie de coude en face et en amont de ladite rampe (48) un second bossage rentrant (60) à extension sensiblement perpendiculaire à la direction de l'écoulement d'air dans le corps tubulaire (24).

9. Répartiteur d'air (10') selon la revendication 8, **caractérisé en ce que** ledit second bossage (60) présente un profil convergent/divergent dans le sens de l'écoulement d'air dans le corps tubulaire (24).

10. Répartiteur (10,10') d'air selon l'une des revendications 1 à 9, **caractérisé en ce que** le corps tubulaire (24) dans sa partie linéaire présente une section droite (34) sensiblement rectangulaire à angles arrondis dont un petit côté (36) coude correspond au flanc du corps tubulaire opposé au coude (30) et porteur desdits embranchements (37,38,39,40,41,42,43,44) des canaux de jonction (45,46,65,66).

11. Répartiteur d'air (10,10') selon l'une des revendications 1 à 10, **caractérisé en qu'**il est adapté pour être monté parallèlement à la face d'admission (12) correspondante de la culasse dudit moteur avec les canaux de jonction (37,38,39,40) disposés en regard des conduits d'admission (45,46,65,66) de culasse correspondants aux cylindres respectifs et parallèlement à l'alignement des cylindres de façon à ce que ledit plan diamétral P3 soit normal à ladite face d'admission culasse (12).

12. Moteur à combustion interne, notamment pour véhicule automobile, comportant au moins un répartiteur d'air selon l'une des revendications 1 à 10 monté sur une face d'admission de la culasse dudit moteur.

13. Moteur à combustion interne de type diesel, notamment pour véhicule automobile, comportant au moins un répartiteur d'air selon l'une des revendications 1 à 10 monté sur une face d'admission de la culasse dudit moteur.

## Claims

1. Air distributor (10, 10') for an internal combustion engine comprising at least a plurality of cylinders in line (15, 16, 17, 18) with two intake ducts per cylinder, said distributor comprising a substantially cylindrical main tubular body (24) provided with lateral connecting channels (45, 46, 65, 66) for supplying the cylinders, and whereof the branches (37, 38, 39, 40, 41, 42, 43, 44) with the main tubular body open in a substantially aligned manner along a generatrix GA of said main tubular body, the main tubular body (24) extending upstream of said branches by a substantially 180° elbow (30) opening on an air inlet (32), said elbow being inclined to the diametral plane P3 of said main body containing the generatrix GA for alignment of the branches, **characterized in that** it comprises a recess (70) placed in the tubular body (24) opposite the branches (37, 38, 40, 41) of the connecting channels (45, 46, 65, 66) of the first (15) and the second distributed cylinder (16) and having a lowest area (72) between the branches of the first and second distributed cylinders.

2. Air distributor (10, 10') according to Claim 1, **characterized in that** the lowest area (72) is placed just downstream of the downstream branch (38) of the first distributed cylinder (15).

3. Air distributor (10, 10') according to either of Claims 1 and 2, **characterized in that** said recess (70) has a convergent/divergent profile (71, 73) in the air flow direction in the tubular body (24) on either side of the lowest area (72).

4. Air distributor (10, 10') according to Claims 2 and 3 taken in combination, **characterized in that** the convergent/divergent profile (71, 73) extends substantially from downstream of the upstream branch (37) of the first distributed cylinder (15) to upstream of the downstream branch (40) of the second distributed cylinder (16).

5. Air distributor (10, 10') according to one of Claims 1 to 4, **characterized in that** said recess (70) extends substantially perpendicular to the air flow direction in the tubular body (24).

6. Air distributor (10') according to one of Claims 1 to 5, **characterized in that** it comprises, upstream and in the neighborhood of the branches (37, 38) of the connecting channels (45, 46) of the first distributed cylinder (15) and on the side of the elbow inclination, a partial throttling ramp (48) of the air flow passage of the main tubular body (24).

7. Air distributor (10') according to Claim 5, **characterized in that** said ramp (48) is in the form of an asymmetrical wheel ramp of which the upstream (50) and downstream (52) faces are gently and steeply inclined, respectively, said ramp being inclined laterally to said diametral plane P3.

8. Air distributor (10') according to either of Claims 6 and 7, **characterized in that** it comprises substantially at the elbow outlet, facing and upstream of said ramp (48), a second recess (60) extending substantially perpendicular to the air flow direction in the tubular body (24).

9. Air distributor (10') according to Claim 8, **characterized in that** said second recess (60) has a convergent/divergent profile in the air flow direction in the tubular body (24).

10. Air distributor (10, 10') according to one of Claims 1 to 9, **characterized in that** in its linear portion, the tubular body (24) has a substantially rectangular cross section (34) with rounded angles, whereof a small elbow side (36) corresponds to the side of the tubular body opposite the elbow (30) and carries said branches (37, 38, 39, 40, 41, 42, 43, 44) of the connecting channels (37, 38, 39, 40).

11. Air distributor (10, 10') according to one of Claims 1 to 10, **characterized in that** it is suitable for being mounted parallel to the corresponding intake face (12) of the cylinder head of said engine with the connecting channels (37, 38, 39, 40) placed opposite the cylinder head intake ducts (45, 46, 65, 66) corresponding to the respective cylinders and parallel to the alignment of the cylinders, so that said diametral plane P3 is normal to said cylinder head intake face (12).

12. Internal combustion engine, in particular for a motor vehicle, comprising at least one air distributor according to one of Claims 1 to 10, mounted on an intake face of the cylinder head of said engine.

13. Internal combustion engine of the diesel type, in particular for a motor vehicle, comprising at least one air distributor according to one of Claims 1 to 10 mounted on an intake face of the cylinder head of said engine.

## Patentansprüche

1. Luftverteiler (10, 10') für einen Verbrennungsmotor, der mindestens mehrere in Reihe angeordnete Zylinder (15, 16, 17, 18) mit zwei Ansaugkanälen pro Zylinder aufweist, wobei der Verteiler einen im Wesentlichen zylindrischen, rohrförmigen Hauptkörper (24) aufweist, der mit seitlichen Verbindungskanälen (45, 46, 65, 66) für die Versorgung der Zylinder versehen ist und deren Verbindungen (37, 38, 39, 40, 41, 42, 43, 44) mit dem rohrförmigen Hauptkörper im Wesentlichen an einer Mantellinie GA des rohrförmigen Hauptkörpers fluchtend münden, wobei der rohrförmige Hauptkörper (24) vor den Verbindungen durch ein im Wesentlichen um 180° gebogenes Kniestück (30) verlängert wird, das sich auf eine Lufteinlassöffnung (32) öffnet, wobei das Kniestück bezüglich der diametralen Ebene P3 des Hauptkörpers, die die Fluchtungs-Mantellinie GA der Verbindungen umfasst, geneigt ist, **dadurch gekennzeichnet, dass** er eine einspringende Wölbung (70) aufweist, die im rohrförmigen Körper (24) gegenüber den Verbindungen (37, 38, 40, 41) der Verbindungskanäle (45, 46, 65, 66) des ersten (15) und des zweiten verteilten Zylinders (16) angeordnet ist und eine Scheitelzone (72) zwischen den Verbindungen des ersten und des zweiten verteilten Zylinders aufweist.

2. Luftverteiler (10, 10') nach Anspruch 1, **dadurch gekennzeichnet, dass** die Scheitelzone (72) direkt hinter der hinteren Verbindung (38) des ersten verteilten Zylinders (15) angeordnet ist.

3. Luftverteiler (10, 10') nach einem der Ansprüche 1 und 2, **dadurch gekennzeichnet, dass** die Wölbung (70) ein konvergierendes/divergierendes Profil (71, 73) in Richtung der Luftströmung im rohrförmigen Körper (24) zu beiden Seiten der Scheitelzone (72) aufweist.

4. Luftverteiler (10, 10') nach den Ansprüchen 2 und 3 in Kombination, **dadurch gekennzeichnet, dass** das konvergierende/divergierende Profil (71, 73) sich im Wesentlichen von hinter der vorderen Verbindung (37) des ersten verteilten Zylinders (15) bis vor die hintere Verbindung (40) des zweiten verteilten Zylinders (16) erstreckt.

5. Luftverteiler (10, 10') nach einem der Ansprüche 1 bis 4, **dadurch gekennzeichnet, dass** die Wölbung (70) eine Ausdehnung im Wesentlichen lotrecht zur Richtung der Luftströmung im rohrförmigen Körper (24) aufweist.

6. Luftverteiler (10') nach einem der Ansprüche 1 bis 5, **dadurch gekennzeichnet, dass** er vor den und in der Nähe der Verbindungen (37, 38) der Verbindungskanäle (45, 46) des ersten verteilten Zylinders (15) und auf der Seite der Neigung des Kniestücks eine Teilverengungsrampe (48) des Luftströmungsquerschnitts des rohrförmigen Hauptkörpers (24) aufweist.

7. Luftverteiler (10') nach Anspruch 5, **dadurch gekennzeichnet, dass** die Rampe (48) in Form einer asymmetrischen Schanze vorliegt, deren vordere (50) und hintere Seiten (52) eine geringe bzw. starke Neigung haben, wobei die Rampe seitlich bezüglich der diametralen Ebene P3 geneigt ist.

8. Luftverteiler (10') nach einem der Ansprüche 6 und 7, **dadurch gekennzeichnet, dass** er im Wesentlichen am Ausgang des Kniestücks gegenüber und vor der Rampe (48) eine zweite einspringende Wölbung (60) mit einer Ausdehnung im Wesentlichen lotrecht zur Richtung der Luftströmung im rohrförmigen Körper (24) aufweist.

9. Luftverteiler (10') nach Anspruch 8, **dadurch gekennzeichnet, dass** die zweite Wölbung (60) ein konvergierendes/divergierendes Profil in Richtung der Luftströmung im rohrförmigen Körper (24) aufweist.

10. Luftverteiler (10, 10') nach einem der Ansprüche 1 bis 9, **dadurch gekennzeichnet, dass** der rohrförmige Körper (24) in seinem linearen Bereich einen im Wesentlichen rechteckigen Querschnitt (34) mit abgerundeten Ecken aufweist, von dem eine kleine Kniestückeite (36) der Flanke des rohrförmigen Körpers entgegengesetzt zum Kniestück (30) entspricht und die Verbindungen (37, 38, 39, 40, 41, 42, 43, 44) der Verbindungskanäle (37, 38, 39, 40) trägt.

11. Luftverteiler (10, 10') nach einem der Ansprüche 1 bis 10, **dadurch gekennzeichnet, dass** er geeignet ist, um parallel zur entsprechenden Ansaugseite (12) des Zylinderkopfs des Motors, mit den Verbindungskanälen (37, 38, 39, 40) gegenüber den Zylinderkopf-Ansaugkanälen (45, 46, 65, 66) angeordnet, die den jeweiligen Zylindern entsprechen, und parallel zur fluchtenden Anordnung der Zylinder montiert zu werden, damit die diametrale Ebene P3 senkrecht zur Zylinderkopf-Ansaugseite (12) ist.

12. Verbrennungsmotor, insbesondere für ein Kraftfahrzeug, der mindestens einen Luftverteiler nach einem der Ansprüche 1 bis 10 aufweist, der auf eine Ansaugseite des Zylinderkopfs des Motors montiert ist.

13. Verbrennungsmotor vom Typ Dieselmotor, insbesondere für ein Kraftfahrzeug, der mindestens einen Luftverteiler nach einem der Ansprüche 1 bis 10 aufweist, der auf eine Ansaugseite des Zylinderkopfs des Motors montiert ist.
